# EUROPÄISCHE PATENTSCHRIFT

(11) **EP 0 704 513 B1**
(45) Veröffentlichungstag und Bekanntmachung des Hinweises auf die Patenterteilung: **10.01.2001**
(21) Anmeldenummer: 95114686.9
(22) Anmeldetag: 19.09.1995
(51) Int. Cl.: C09K 19/38, C08F 20/34, C08F 20/30

(54) **Seitengruppenpolymere und ihre Verwendung für optische Bauelemente**
Side chain polymers and their use for optical components
Polymères à chaînes latérales et leur emploi pour composants optiques

(30) Priorität: 30.09.1994 DE 4434966
(43) Veröffentlichungstag der Anmeldung: 03.04.1996
(73) Patentinhaber: BAYER AG, 51368 Leverkusen (DE)
(72) Erfinder: Bieringer, Thomas, D-95463 Bindlach (DE); Gessner, Uwe, Dr., D-10367 Berlin (DE); Haarer, Dietrich, Prof. Dr., D-95448 Bayreuth (DE); Rübner, Joachim, Dr., D-10409 Berlin (DE); Wuttke, Roland, Dr., D-95448 Bayreuth (DE); Claussen, Uwe, Dr., D-51379 Leverkusen (DE); Ruhmann, Ralf, Dr., D-12618 Berlin (DE); Berneth, Horst, Dr., D-51373 Leverkusen (DE); Kostromin, Sergei, Dr., D-53913 Swisttal-Buschhoven (DE); Neigl, Ralf, Dr., D-51515 Kürten-Eichhof (DE)

(56) Entgegenhaltungen:
- EP-A- 0 230 898
- EP-A- 0 322 708
- EP-A- 0 538 773
- EP-A- 0 590 421
- EP-A- 0 659 865
- WO-A-91/12280
- GB-A- 2 246 138

## Beschreibung

Die Erfindung betrifft Seitengruppenpolymere mit photoinduzierbar konfigurationsveränderlichen Seitengruppen und permanent formanisotropen Seitengruppen und die Verwendung dieser Seitengruppenpolymeren für optische Bauelemente, insbesondere in der optischen Datenspeicherung und -übertragung. Vor der Bestrahlung sind die erfindungsgemäßen Seitengruppenpolymeren im glasartigen Zustand der Polymeren optisch isotrop, amorph, transparent und nicht-lichtstreuend. Durch die Bestrahlung im Glaszustand wird lichtinduziert eine Ausrichtung der Seitengruppen bewirkt, wodurch die Seitengruppenpolymeren doppelbrechend und dichroitisch werden, ohne ihre Transparenz zu verlieren; außerdem ändern sich die Lichtstreueigenschaften. Die lichtinduzierte optische Anisotropie kann thermisch oder durch erneute Bestrahlung reversibel modifiziert oder aufgehoben werden.

Die Seitengruppenpolymeren eignen sich zur Speicherung optischer Informationen und zur Herstellung passiver oder optisch schaltbarer Komponenten.

Aus der Literatur sind verschiedene Polymere mit photochromen Gruppen bekannt, deren optische Eigenschaften wie Absorption, Emission, Reflexion, Doppelbrechung oder Streuung mittels lichtinduzierter physikalischer und/oder chemischer Prozesse reversibel verändert werden. Eine interessante und neuartige Methode, die optischen Eigenschaften von Polymeren reversibel zu ändern, besteht in der lichtinduzierten Variation des Ordnungsgrades, der Orientierungsrichtung und der Orientierungsverteilung oder der Morphologie der Polymeren durch verschiedene Prozesse. Die lichtinduzierte Änderung der Ordnung in den Polymeren dient zu Speicherung der Information.

So beschreiben Eich und Wendorff (Makromol. Chem., Rapid Commun. (1987) 8, 467) Azobenzolgruppen-haltige flüssigkristalline Polymere. Diese bilden flüssigkristalline Domänen, in denen durch die Einwirkung des Lichtes nur die Gruppen umorientiert werden, die zuvor eine Isomerisierungsreaktion durchlaufen haben (Anderle, Birenheide, Wendorff, Makromol. Chem., Macromol. Symp. 44, 11-22 (1991)). Der Speichereffekt beruht auf der Störung des geordneten Zustands der Monodomäne durch die Umorientierung der photochromen Seitengruppen in einer ansonsten starren Matrix.

In jüngster Zeit sind darüber hinaus flüssigkristalline Polymere bekannt geworden, bei denen die photochemische Umorientierung der photochromen Gruppen eine kooperative Umorientierung auch nichtphotochromer Gruppen bewirkt, so daß die optische Achse der Monodomänen gedreht wird. (Ivanov, Yakovlev, Kostromin, Shibaev, Läsker, Stumpe, Kreysig, Makromol. Chem., Rapid Commun. 12, 709-715 (1991)).

Der gravierende Anwendungsnachteil der flüssigkristallinen Systeme besteht darin, daß ihre Verwendung generell eine perfekte, makroskopisch einheitliche Orientierung durch externe Felder und/oder Oberflächeneffekte zu einer Monodomäne voraussetzt.

Die Orientierung flüssigkristalliner Polymerer durch elektrische und magnetische Felder sowie durch mechanische Kräfte und Oberflächeneffekte ist technisch außerordentlich aufwendig, so daß eine breite Anwendung derartiger flüssigkristalliner Polymerer bisher nicht möglich ist.

Ferner wurde gefunden, daß sich prinzipiell in einem amorphen System eine Doppelbrechung induzieren läßt (Anderle, Birenheide, Eich, Wendorff, Makromol. Chem., Rapid, Comm. (1989) 10, 477ff und EP 335 302). Allerdings ist der Effekt um Größenordnungen kleiner als der aus einer flüssig-kristallinen Monodomäne erhaltene und aus diesem Grund technisch nicht nutzbar.

Weiterhin ist bekannt (Natansohn, Rochon, Gosselin, Xie, Macromolecules 25, 2268-2273 (1992)), daß bestimmte Homopolymere bei der Bestrahlung mit Licht anisotrope Eigenschaften ausbilden können.

Ein derartiges System ist strukturell invariant, nicht langzeitstabil und in seinen Eigenschaften in weiten Grenzen festgelegt. Ein besonderer Vorteil von Copolymeren gegenüber Homopolymeren ist gerade ihre strukturelle Flexibilität, die die Anpassung der Eigenschaften an den jeweiligen Anwendungszweck unter Beibehaltung der informationsspeichernden Eigenschaften erlaubt.

Für die technische Verwertbarkeit photoadressierbarer Materialien wäre ein System von Vorteil, das einerseits optisch isotrop, amorph und homogen ist und andererseits über die überragenden dichroitischen und doppelbrechenden Eigenschaften eines flüssig-kristallinen Polymers verfügt, verbunden mit einer gewissen Bandbreite der Strukturvariation, um die übrigen Eigenschaften des Materials den jeweiligen technischen Erfordernissen anpassen zu können.

Aufgabe der Erfindung war die Bereitstellung eines Systems, das einerseits ein optisch isotropes flächenhaftes Gebilde liefert und andererseits durch Einwirkung von Licht in einem Maße dichroitisch und doppelbrechend wird, wie dies von sehr guten flüssig-kristallinen Systemen bekannt ist.

Diese Aufgabe wird durch Seitengruppenpolymere gelöst, die bestimmte photochrome Seitengruppen und bestimmte permanent formanisotrope Seitengruppen mit hoher Anisotropie der molekularen Polarisierbarkeit aufweisen, die im Gegensatz zu bisher bekannten photochromen flüssigkristallinen Polymeren und beschriebenen Lösungsvarianten technologisch variabel und leicht in einen optisch isotropen, transparenten, nicht-lichtstreuenden, amorphen Zustand überführt werden können.

Gegenstand der Erfindung sind also Copolymere mit als Rückgrat wirkender Poly(meth)acrylat-Hauptkette und davon abzweigenden kovalent gebundenen Seitengruppen, die sowohl Strukturen der Formel 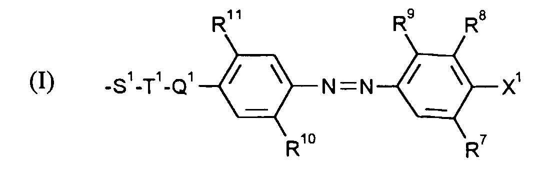 als auch 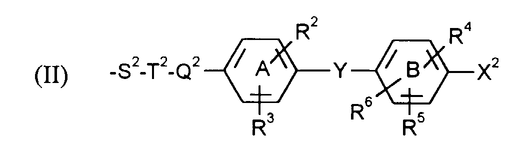 enthalten,
worin
- S¹, S²: unabhängig voneinander die Atome O, S oder den Rest NR¹ bedeuten,
- R¹: Wasserstoff, C₁-C₆-Alkyl oder Phenyl bedeutet,
- T¹, T²: unabhängig voneinander den Rest (CR¹,R¹²)ₙ bedeuten, der gegebenenfalls durch -O-, -S-, -NR¹- oder -OSiR¹₂O- unterbrochen sein kann,
- n: eine ganze Zahl von 2 bis 12,
- Q¹, Q²: unabhängig voneinander -O-, -COO-, -OCO-, -CONR¹-, -NR¹CO-, -NR¹-, -O-C₆H₄-COO- oder -O-C₆H₄-CONR¹- darstellen, wobei zusätzlich die Kombinationen S¹T¹Q¹ und S²T²Q² unabhängig voneinander 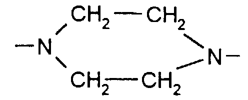 sein können,
- R² bis R⁶: unabhängig voneinander Wasserstoff, Halogen, C₁-C₄-Alkyl, C₁-C₄-Alkoxy, CF₃, Nitro, SO₂CH₃, SO₂NH₂ oder Cyan bedeuten, wobei mindestens einer der Substituenten R² bis R⁶ ungleich Wasserstoff sein muß,
- R⁷ bis R⁹: unabhängig voneinander Wasserstoff, C₁-C₆-Alkyl, Hydroxyl, C₁-C₆-Alkoxy, Phenoxy, C₁-C₆-Alkylthio, Phenylthio, Halogen, CF₃, CCl₃, CBr₃, Nitro, Cyan, C₁-C₆-Alkylsulfonyl, Phenylsulfonyl, COOR¹, Aminosulfonyl, C₁-C₆-Alkylaminosulfonyl, Phenylaminosulfonyl, Aminocarbonyl, C₁-C₆-Alkylaminocarbonyl, Phenylaminocarbonyl bedeuten,
- R¹⁰: Wasserstoff, Halogen, C₁-C₆-Alkyl, Hydroxyl, C₁-C₆-Alkoxy, Phenoxy, C₁-C₄-Acylamino, C₁-C₄-Alkylsulfonylamino bedeutet,
- R¹¹: Wasserstoff, Halogen, C₁-C₆-Alkyl, Hydroxyl, C₁-C₆-Alkoxy, Phenoxy bedeutet,
- Y: eine direkte Bindung, -COO-, -OCO-, -CONH-, -NHCO-, -O-, -NH-, -N(CH₃)- und
- X¹, X²: unabhängig voneinander Wasserstoff, Hydroxyl, Mercapto, CF₃, CCl₃, CBr₃, Halogen, Cyan, Nitro, COOR¹, C₁-C₆-Alkyl, C₅-C₁₂-Cycloalkyl, C₁-C₁₂-Alkoxy, C₁-C₁₂-Alkylthio, C₆-C₁₂-Aryl, C₆-C₁₂-Aryloxy, C₆-C₁₂-Arylthio, C₁-C₆-Alkylsulfonyl, C₆-C₁₂-Arylsulfonyl, Aminosulfonyl, C₁-C₆-Alkylaminosulfonyl, Phenylaminosulfonyl, Aminocarbonyl, C₁-C₆-Alkylaminocarbonyl, Phenylaminocarbonyl, NR¹²,R¹³, NH-CO-R¹², NH-SO₂-R¹², NH-CO-NR¹,R², NH-CO-O-R¹² oder SO₂-CF₃ bedeuten, worin R¹² und R¹³ unabhängig voneinander für Wasserstoff, C₁-C₄-Alkyl oder Phenyl stehen,
mit der Maßgabe, daß für den Fall, daß R⁷ bis R¹¹ für Wasserstoff stehen und Ring B durch C₁-C₄-Alkyl, C₁-C₄-Alkoxy, Nitro oder Cyan substituiert ist, in dem System Ring A -Y- Ring B mindestens noch ein zweiter Substituent vorhanden ist.

Die bevorzugten erfindungsgemäßen Polymeren enthalten allein wiederkehrende Einheiten mit den Seitengruppen I und II, und zwar vorzugsweise solche der Formeln 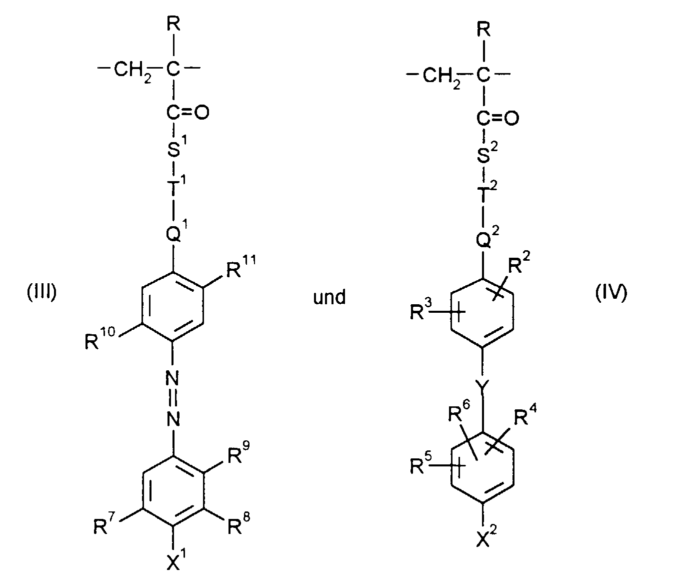 mit R = H oder Methyl.

Bevorzugte Beispiele der Gruppen T¹ und T² sind unabhängig voneinander 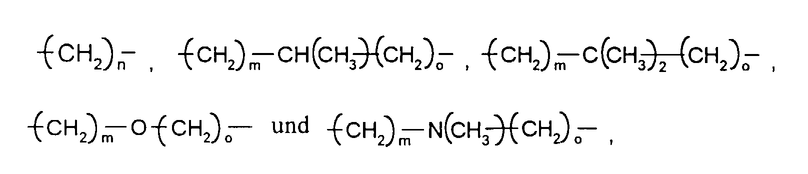 worin
- n: eine ganze Zahl von 2 bis 6 ist und
- m und o: unabhängig voneinander ganze Zahlen von 0 bis 2 sind, deren Summe mindestens 1 beträgt.

Bevorzugte Monomere zur Einführung der Seitengruppe I entsprechen der Formel 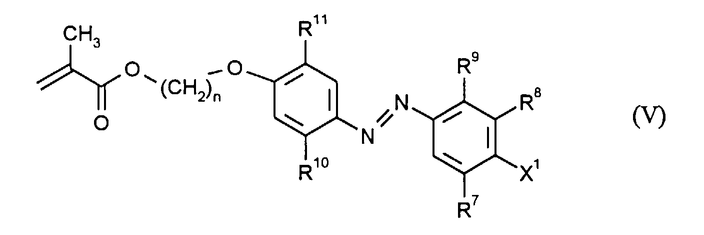 worin
- X¹ und R⁷ bis R¹¹: die obengenannte Bedeutung haben und
- n: für eine ganze Zahl von 2 bis 10, vorzugsweise 4 bis 6 steht.

Beispiele für derartige Monomere sind

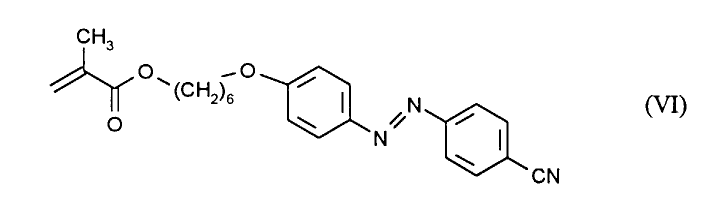

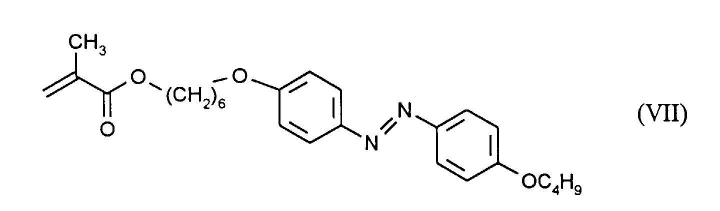

Andere bevorzugte Monomere zur Einführung der Seitengruppe I entsprechen der Formel 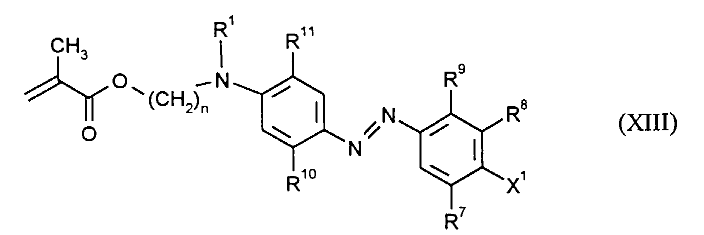 worin
- R¹, X¹ und R⁷ bis R¹¹: die obengenannten Bedeutungen haben und
- n: für eine ganze Zahl von 2 bis 10, vorzugsweise 4 bis 6 steht.

Beispiele für derartige Monomere sind

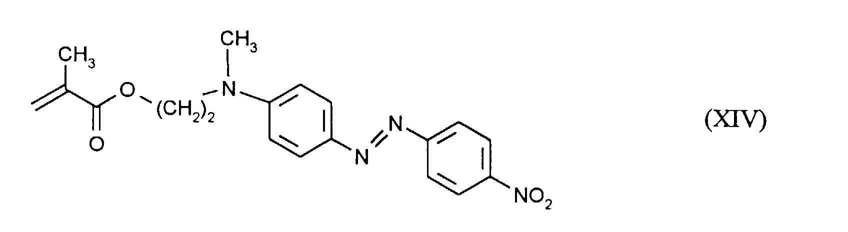

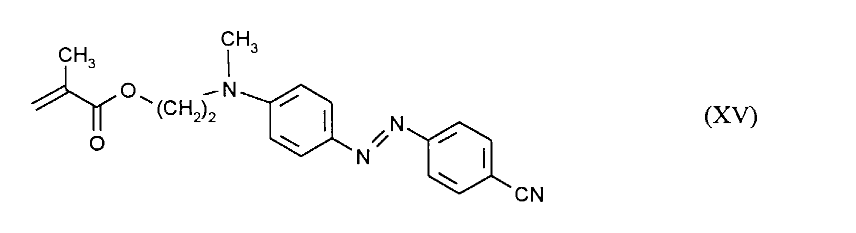

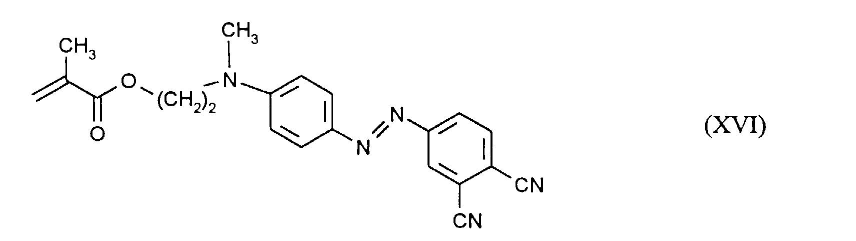

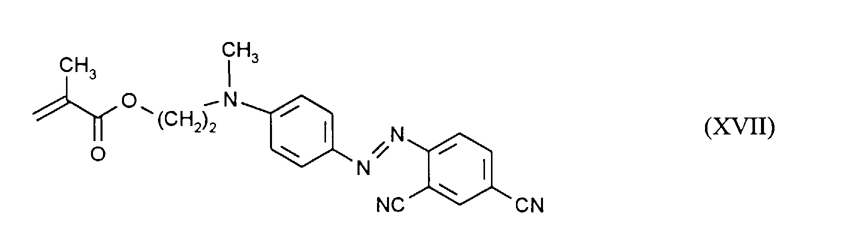

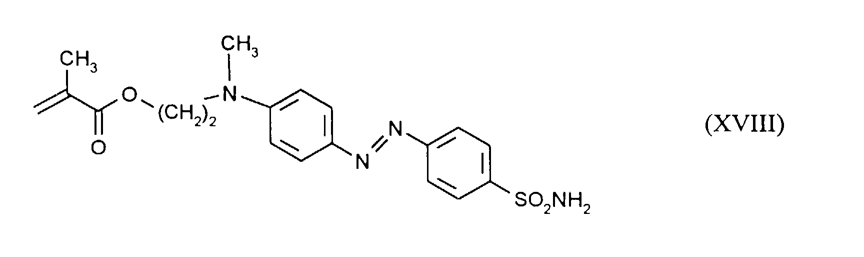

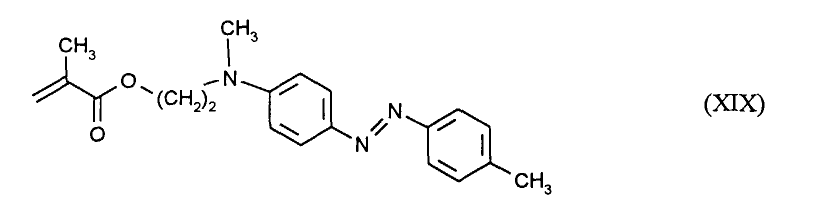

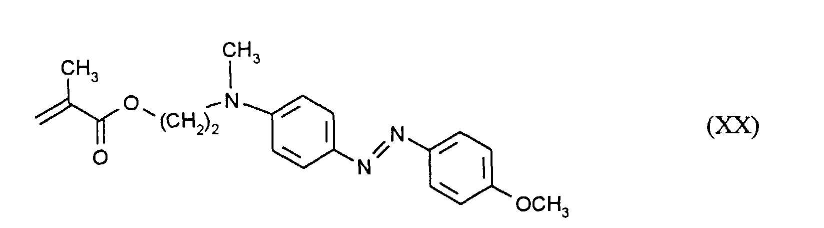

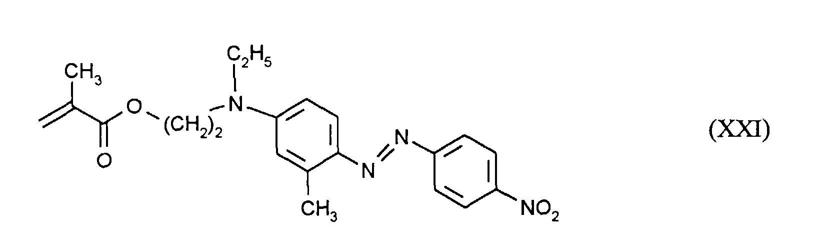

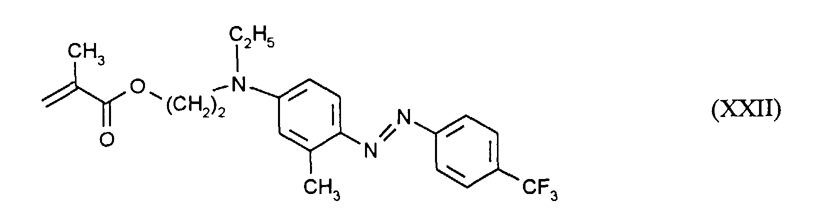

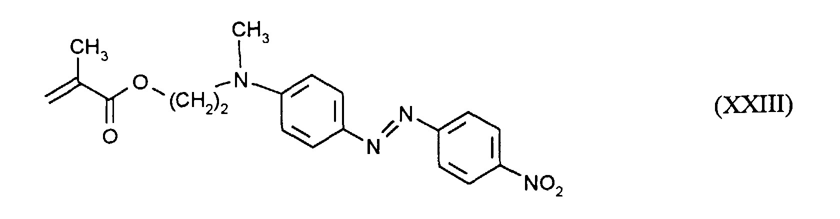

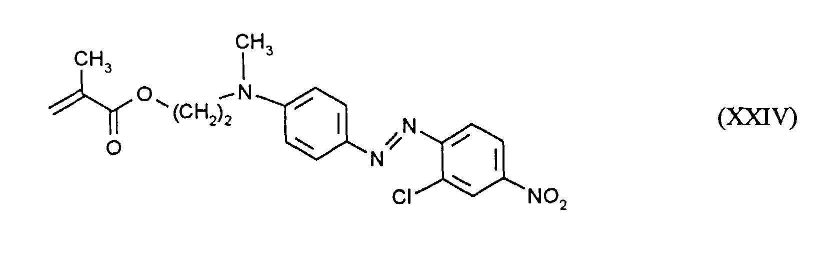

Als bevorzugte Seitengruppen II kommen insbesondere solche der Formel 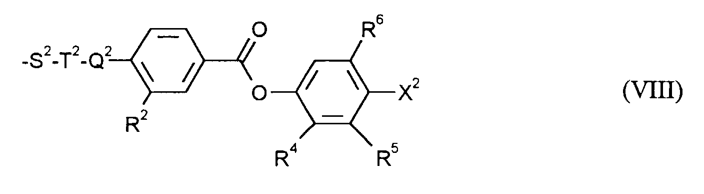 worin
X², T², Q² und R² bis R⁶ die oben angegebenen Bedeutungen haben.

Bevorzugte Monomere zur Einführung der Seitengruppen II entsprechen der Formel 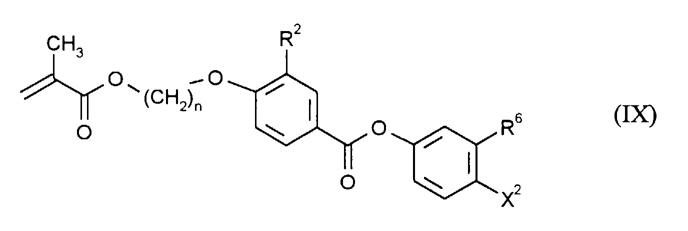 worin
- n: eine ganze Zahl von 2 bis 6,
- R², R⁶: unabhängig voneinander für H, F, Cl, Br, OH, OCH₃, CH₃, CF₃, NO₂ oder CN stehen und
wenigstens einer der Substituenten R² und R⁶ ungleich H sein muß und
- X²: H, F, Cl, Br, CN, NO₂, COOR¹, C₅-C₁₂-Cycloalkyl, C₁-C₁₂-Alkoxy oder C₆-C₁₂-Aryl bedeuten.

Beispiele für derartige Monomere sind

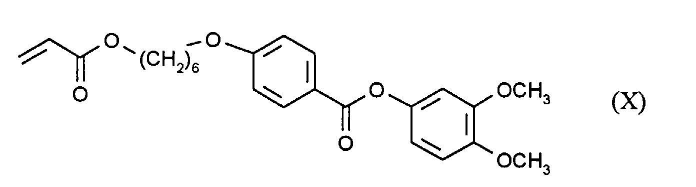

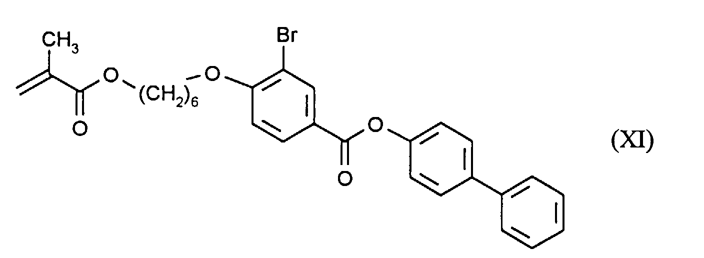

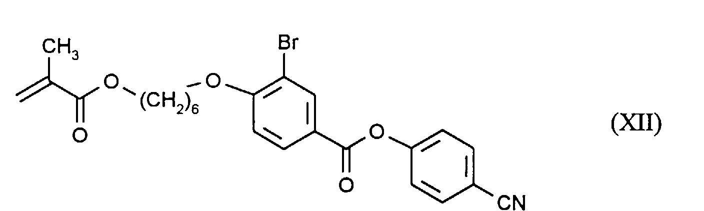

Die Hauptkette der Seitengruppenpolymeren wird von Monomeren, die die Seitengruppen (I) tragen, von Monomeren, die die Seitengruppe (II) tragen und gegebenenfalls weiteren Monomeren gebildet, wobei insbesondere der Anteil der Monomeren, die die Seitengruppe (I) aufweisen, 25 bis 80 Mol-%, vorzugsweise 30 bis 70 Mol-%, der Anteil der Monomeren, die die Seitengruppe (II) aufweisen, 20 bis 75 Mol-%, vorzugsweise 30 bis 70 Mol-%, und der Anteil der weiteren Monomeren 0 bis 50 Mol-% betragen, jeweils bezogen auf die Summe sämtlicher eingebauter Monomereinheiten.

Als "weitere" wiederkehrende Einheiten kommen alle Bausteine in Betracht, die sich chemisch in das Seitengruppenpolymer einbauen lassen. Sie dienen im wesentlichen lediglich dazu, die Konzentration der Seitengruppen I und II im Polymer zu verringern und bewirken also quasi einen "Verdünnungs"effekt. Im Falle von Poly(meth)acrylaten umfassen die "weiteren" Monomeren ethylenisch ungesättigte copolymerisierbare Monomere, die bevorzugt α-substituierte Vinylgruppen oder β-substituierte Allylgruppen tragen, bevorzugt Styrol; aber auch beispielsweise kernchlorierte und -alkylierte bzw. -alkenylierte Styrole, wobei die Alkylgruppen 1 bis 4 Kohlenstoffatome enthalten können, wie z.B. Vinyltoluol, Divinylbenzol, α-Methylstyrol, tert.-Butylstyrole, Chlorstyrole; Vinylester von Carbonsäuren mit 2 bis 6 Kohlenstoffatomen, bevorzugt Vinylacetat; Vinylpyridin, Vinylnaphthalin, Vinylcyclohexan, Acrylsäure und Methacrylsäure und/oder ihre Ester (vorzugsweise Vinyl-, Allyl- und Methallylester) mit 1 bis 4 Kohlenstoffatomen in der Alkoholkomponente, ihre Amide und Nitrile, Maleinsäureanhydrid, -halb- und -diester mit 1 bis 4 Kohlenstoffatomen in der Alkoholkomponente, -halb- und -diamide und cyclische Imide wie N-Methylmaleinimid oder N-Cyclohexylmaleinimid; Allylverbindungen wie Allylbenzol und Allylester, wie Allylacetat, Phthalsäurediallylester, Isophthalsäurediallylester, Fumarsäurediallylester, Allylcarbonate, Diallylcarbonate, Triallylphosphat und Triallylcyanurat.

Bevorzugte "weitere" Monomere entsprechen der Formel 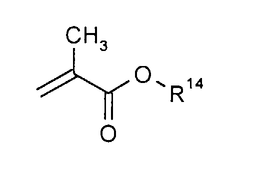 worin
- R¹⁴: für einen gegebenenfalls verzweigten C₁-C₆-Alkylrest oder einen wenigstens einen weiteren Acrylrest enthaltenden Rest steht.

Die erfindungsgemäßen Polymeren können auch mehr als eine Seitengruppe, die unter die Definition von (I) fällt, oder mehr als eine Seitengruppe, die unter die Definition von (II) fällt, oder mehrere Seitengruppen sowohl der Definition von (I) als auch von (II) enthalten. Im vorliegenden Fall des Vorhandenseins von Seitenketten der Struktur (I) und (II) hat in vorteilhafter Weise wenigstens eine Gruppe Q¹ bzw. Q² die Bedeutung -O-C₆H₄-COO- oder -O-C₆H₄-CONR¹-.

Die erfindungsgemäßen Polymeren besitzen vorzugsweise Glasübergangstemperaturen Tg von mindestens 40°C. Die Glasübergangstemperatur kann beispielsweise nach B. Vollmer, Grundriß der Makromolekularen Chemie, S. 406-410, Springer-Verlag, Heidelberg 1962, bestimmt werden.

Die erfindungsgemäßen Polymeren besitzen im allgemeinen ein als Gewichtsmittel bestimmtes Molekulargewicht von 5.000 bis 2.000.000, vorzugsweise von 8.000 bis 1.500.000, bestimmt durch Gelpermeationschromatographie (geeicht mit Polystyrol).

Die Strukturelemente mit hoher Formanisotropie und hoher Anisotropie der molekularen Polarisierbarkeit sind die Voraussetzung für hohe Werte der optischen Anisotropie. Durch die Struktur der Polymeren werden die zwischenmolekularen Wechselwirkungen der Strukturelemente (I) und (II) so eingestellt, daß die Ausbildung flüssigkristalliner Ordnungszustände unterdrückt wird und optisch isotrope, transparente nichtstreuende Filme hergestellt werden können. Andererseits sind die zwischenmolekularen Wechselwirkungen dennoch stark genug, daß bei Bestrahlung mit polarisiertem Licht ein photochemisch induzierter, kooperativer, gerichteter Umorientierungsprozeß der photochromen und der nichtphotochromen Seitengruppen bewirkt wird.

Bevorzugt treten zwischen den Seitengruppen (I) und (II) Wechselwirkungskräfte auf, die ausreichen, daß die photoinduzierte Konfigurationsänderung der Seitengruppe (I) eine gleichgerichtete - sogenannte kooperative - Umorientierung der Seitengruppe (II) bewirkt.

In den optisch isotropen amorphen photochromen Polymeren können extrem hohe Werte der optischen Anisotropie induziert werden (Δn = 0,01 bis 0,2, vorzugsweise 0,01 bis 0,1). Die Werte sind denen vergleichbar, die in Monodomänen flüssigkristalliner Polymerer erhalten wurden, oder sind sogar größer als diese. Sie sind signifikant größer im Vergleich zu amorphen Polymeren ohne diese Strukturelemente.

Durch den Einfluß von aktinischem Licht werden in den Seitengruppenpolymeren Ordnungszustände generiert und modifiziert und damit ihre optischen Eigenschaften moduliert.

Als Licht wird vorzugsweise linear polarisiertes Licht verwendet, dessen Wellenlänge im Bereich der Absorptionsbande der photoinduzierbar konfigurationsveränderlichen Seitengruppen (I) liegt.

Die Herstellung der Seitengruppenmonomeren und ihre Polymerisation können nach literaturbekannten Verfahren durchgeführt werden (beispielsweise DD 276 297, DE 3 808 430, Makromolekulare Chemie 187, 1327-1334 (1984), SU 887 574, Europ. Polym. 18, 561 (1982) und Liq. Cryst. 2, 195 (1987)).

Die Herstellung isotroper Filme gelingt, ohne daß aufwendige Orientierungsverfahren unter Nutzung externer Felder und/oder von Oberflächeneffekten notwendig sind. Sie lassen sich durch Spincoating, Tauchen, Gießen oder andere technologisch leicht beherrschbare Beschichtungsverfahren auf Unterlagen aufbringen, durch Pressen oder Einfließen zwischen zwei transparente Platten bringen oder einfach als selbsttragenden Film durch Gießen oder Extrudieren präparieren. Solche Filme lassen sich durch schlagartiges Abkühlen, d.h. durch eine Abkühlungsrate von > 100 K/min, oder durch rasches Abziehen des Lösungsmittels auch aus flüssig-kristallinen Polymeren herstellen, die Strukturelemente im beschriebenen Sinne enthalten

Die Schichtdicke liegt vorzugsweise zwischen 0,1 µm und 1 mm, besonders zwischen 0,5 und 100 µm.

Die lichtinduzierte Orientierung der Seitengruppen bzw. das Einschreiben von Information erfolgt durch Bestrahlung mit für die photoinduzierbar konfigurationsveränderliche Gruppe geeignetem aktinischen Licht. Dies führt zu einer winkelabhängigen Photoselektion, die eine Umorientierung der photochromen Gruppen und - durch einen kooperativen Effekt - eine kontinuierliche, gleichgerichtete Umorientierung der permanent formanisotropen Seitengruppen bis maximal senkrecht zum elektrischen Vektor des Anregungslichtes bewirkt.

Die Lichtexposition kann flächig oder lokal mit linear polarisiertem, kohärenten oder nicht kohärenten, monochromatischen Licht erfolgen, dessen Wellenlänge im Absorptionsbereich der photoinduzierbar konfigurationsveränderlichen Seitengruppen liegt.

Die Information kann mit einem Laser punktförmig oder mit einem Laser oder einer Lampe flächig unstrukturiert oder unter Verwendung einer Maske oder durch die Einschreibung eines holographischen Brechungsindexgitters bei einer Intensität von 0,1 bis 5.000 mW/cm² in einer Zeit zwischen 0,1 und 6000 sec. eingeschrieben werden.

Der Umorientierungsprozeß ist außerordentlich wirksam. Die unterhalb Tg erzielbare Doppelbrechungsänderung Δn beträgt vorzugsweise 0,01 bis 0,20, insbesondere 0,05 bis 0,10.

Die hohen Werte der photochemisch induzierten Doppelbrechung und des photochemisch induzierten Dichroismus resultieren aus der molekularen Struktur der Seitengruppen, dem kooperativen Mechanismus der lichtinduzierten Orientierung zu einem Zustand gleicher makroskopischer Orientierung der photochromen und nichtphotochromen, aber permanent formanisotropen Seitengruppen.

Die Vorzugsorientierung ist frei wählbar; sie hängt allein von der Wahl der Richtung des elektrischen Vektors des Anregungslichtes in Bezug auf den Polymerkörper ab. Das Ausmaß der Orientierung ist bei konstanter Temperatur und Wellenlänge allein von der eingestrahlten Energie abhängig, die entweder über die Zeit oder in gewissen Grenzen die Leistung der Lichtquelle variiert werden kann. Es sind somit die Orientierung, die Doppelbrechung und der Dichroismus frei wählbare Parameter, die sich unter gleichbleibenden Randbedingungen bei wiederholtem Einschreiben und Löschen exakt reproduzieren lassen.

In den Seitenkettenpolymeren kann eine reproduzierbare, definierte, kontinuierlich durchstimmbare, langzeitstabile Doppelbrechung erzeugt werden. Sie läßt sich in Transmission im polarisierten Licht als definierter Kontrast darstellen. Bei Verwendung von Polymeren, deren Seitengruppen dichroitische Eigenschaften haben, läßt sich entsprechend ein Dichroismus der Absorption oder der Emission reproduzierbar, definiert und kontinuierlich durchstimmbar erzeugen. Durch einheitliche Bestrahlungsbedingungen wird im gesamten Polymerfilm eine einheitliche Orientierung erzeugt. Bei lokaler Variation der Bestrahlungsbedingungen wie Energiedosis und Polarisationsrichtung wird ein hinsichtlich der Vorzugsorientierung der Seitengruppen strukturierter Film erzeugt, was zu Pixeln mit unterschiedlicher optischer Anisotropie führt.

Die Vorzugsrichtung in der Orientierungsverteilung des optisch anisotropen Films kann durch Belichten mit unpolarisiertem aktinischem Licht wieder rückgängig gemacht und die optische Isotropie entlang der Flächennormalen wieder hergestellt werden. Erneute Bestrahlung mit der gleichen Quelle, jedoch veränderter Lage des elektrischen Vektors in Bezug auf den Polymerfilm führt zu einer Modifizierung der Richtung und Größe der optischen Anisotropie. Auf diese Weise kann zwischen verschiedenen Zuständen bezüglich der Richtung und Größe der optischen Anisotropie wiederholt geschaltet werden.

Auf der Grundlage dieser Effekte steht mit den beschriebenen Polymeren im Prinzip ein Medium für die reversible, optische Datenspeicherung zur Verfügung. Wie bei der Herstellung der Filme entfallen auch nach dem Löschen der Information alle Maßnahmen zur Wiederherstellung der Monodomäne.

Die Polymeren lassen sich zur digitalen oder analogen Datenspeicherung im weitesten Sinne, beispielsweise zur optischen Signalverarbeitung, zur Fourier-Transformation und -Faltung oder in der kohärenten optische Korrelationstechnik, verwenden. Die laterale Auflösung wird durch die Wellenlänge des Ausleselichts begrenzt. Sie erlaubt eine Pixelgröße von 1 bis 100 µm.

Diese Eigenschaft macht die Polymeren zur Verarbeitung von Bildern und zur Informationsverarbeitung mittels Hologrammen besonders geeignet, deren Reproduktion durch Ausleuchten mit einem Referenzstrahl erfolgen kann. Analog läßt sich das Interferenzmuster zweier monochromatischer kohärenter Lichtquellen mit konstanter Phasenbeziehung speichern und durch den Zusammenhang zwischen dem elektrischen Vektor des Lichts und der damit verbundenen Vorzugsrichtung im Speichermedium eine höhere Speicherdichte erzeugen. Entsprechend lassen sich dreidimensionale holographische Bilder speichern. Das Auslesen erfolgt durch Beleuchtung des Hologramms mit monochromatischem, kohärentem Licht. Bei der analogen Speicherung können Werte der Grauskala kontinuierlich und ortsaufgelöst eingestellt werden. Das Auslesen analog gespeicherter Information geschieht im polarisierten Licht, wobei man je nach Stellung der Polarisatoren das positive oder das negative Bild hervorholen kann. Hierbei kann einerseits der durch die Phasenverschiebung von ordentlichem und außerordentlichem Strahl erzeugte Kontrast des Films zwischen zwei Polarisatoren genutzt werden, wobei die Ebenen des Polarisators vorteilhaft einen Winkel von 45° zur Polarisationsebene des Einschreiblichts bilden und die Polarisationsebene des Analysators entweder senkrecht oder parallel zu der des Polarisators steht. Eine andere Möglichkeit besteht in der Detektion des durch induzierte Doppelbrechung verursachten Ablenkwinkels des Leselichts.

Die Polymeren lassen sich als optische Komponenten verwenden, die passiv oder optisch schaltbar sein können. So kann die hohe lichtinduzierte optische Anisotropie zur Modulierung der Intensität und/oder des Polarisationszustandes von Licht benutzt werden. Entsprechend kann man aus einem Polymerfilm durch holographische Strukturierung Komponenten herstellen, die Abbildungseigenschaften haben, die mit Linsen oder Gittern vergleichbar sind. Die Polymeren sind weiterhin zur Herstellung von Polarisatoren einsetzbar.

Weiterer Gegenstand der Erfindung ist also die Verwendung der beschriebenen Polymeren für optische Bauelemente. Als solche optischen Bauelemente sind auch Polarisatoren anzusehen.

Die erfindungsgemäßen Polymeren können in üblicher Weise durch radikalische Copolymerisation der Monomeren in geeigneten Lösungsmitteln, wie z.B. aromatischen Kohlenwasserstoffen wie Toluol oder Xylol, aromatischen Halogenkohlenwasserstoffen wie Chlorbenzol, Ethern wie Tetrahydrofuran und Dioxan, Ketonen wie Aceton und Cyclohexanon, und/oder Dimethylformamid in Gegenwart radikalliefernder Polymerisationsinitiatoren, wie z.B. Azodiisobutyronitril oder Benzoylperoxid, bei erhöhten Temperaturen, in der Regel bei 30 bis 130°C, vorzugsweise bei 40 bis 70°C, möglichst unter Wasser- und Luftausschluß hergestellt werden. Die Isolierung kann durch Ausfällen mit geeigneten Mitteln, z.B. Methanol erfolgen. Die Produkte können durch Umfällen, z.B. mit Chloroform/Methanol gereinigt werden.

Die erfindungsgemäßen Polymeren können selbsttragende Filme bilden.

Vorzugsweise werden sie aber auf Trägermaterialien aufgebracht. Dies kann durch verschiedene an sich bekannte Techniken geschehen, wobei das Verfahren danach ausgewählt wird, ob eine dicke oder dünne Schicht gewünscht wird. Dünne Schichten können z.B. durch Spincoaten oder Rakeln aus Lösungen oder der Schmelze, dickere durch von vorgefertigten Zellen, Schmelzpressen oder Extrudieren erzeugt werden.

Die Prozentangaben in den nachfolgenden Beispielen beziehen sich - falls nicht anders angegeben - jeweils auf das Gewicht.

### Beispiele

### Monomer 1

### Herstellung der 3-Brom-4-[6-(2-methylpropenoyl)hexyloxy)]-benzoesäure

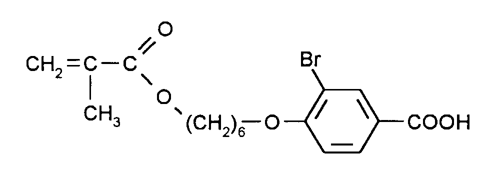

217 g (1 Mol) 3-Brom-4-hydroxybenzoesäure werden in 350 ml Ethanol vorgelegt und tropfenweise mit einer Lösung von 150 g Kaliumhydroxid und 150 ml Wasser versetzt. Dabei tritt Erwärmung bis 52°C auf. Zur klaren Lösung werden ca. 0,2 g Kaliumiodid hinzugefügt und anschließend 150,2 g (1,1 Mol) Chlorhexanol innerhalb einer Stunde zugetropft. Danach wird 15 Stunden unter Rückfluß erhitzt. Die Lösung wird dunkelbraun. Es fallen Kristalle aus. Am Rotationsverdampfer wird eingeengt. Der Rückstand wird mit 1,5 l Wasser versetzt. Die dann klare Lösung wird 3 mal mit 200 ml Ether ausgeschüttelt. Beim Ansäuern der wäßrigen Phase mit Salzsäure fällt ein Produkt aus, das beim längeren Stehen kristallisiert. Nach dem Absaugen, dem dreimaligen Waschen mit je 500 ml Wasser und Lufttrocknung liegen 271 g 3-Brom-[4-(6-hydroxy)hexyloxy]-benzoesäure als Rohprodukt vor. Nach dem Umkristallisieren aus 1,5 l Ethanol/1,5 l Wasser (Filtration über Al₂O₃) wird dünnschichtchromatografisch reine Säure mit einem Schmelzpunkt von 105 bis 108°C erhalten. Hiervon werden 101,5 g (0,28 Mol), 241 g Methacrylsäure (2,8 Mol), 5 g Hydrochinon und 5 g p-Toluolsulfonsäure in 200 ml Chloroform unter Rühren zum Sieden erhitzt. Das Reaktionswasser wird mit Chloroform aus der Reaktionsmischung azeotrop abgetrieben. Nach 4 Stunden sind ca. 10 ml Wasser aus dem Reaktionsgemisch entfernt.

Die Reaktionslösung wird 3 mal mit 300 ml Wasser gewaschen und über Natriumsulfat getrocknet. Das Chloroform wird dann bis 40°C bei 12 Torr abgezogen. Beim Abkühlen kristallisiert das Rohprodukt aus. Zur Abtrennung verbliebener Methacrylsäure wird aus 1,25 l Cyclohexan (Filtration über Al₂O₃) umkristallisiert. Zur Erzeugung eines dünnschichtreinen Produkts ist nochmaliges Umkristallisieren von 70 g Produkt aus der ersten Reinigungsstufe mit 1,2 l Cyclohexan (Filtration über Al₂O₃) erforderlich. Schließlich werden 40 g 3-Brom-4[6-(2-methylpropenoyl)hexyloxy]-benzoesäure erhalten.
Fp.: 99,3°C

### Monomer 2

### Herstellung von 3-Brom-4-[6-(2-methylpropenoyl)-hexyloxy]-4'-cyan-2',6'-dibromphenylbenzoat

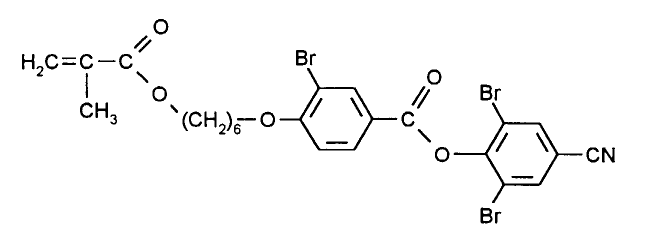

Zu 9,25 g (0,024 Mol) der vorgelegten Säure (Monomer 1) werden 1 Spatelspitze Di-tert.-butylphenol, 16 ml Thionylchlorid und 1 Tropfen Dimethylformamid gegeben. 30 Minuten wird bei Raumtemperatur gerührt. Dabei entsteht eine klare Lösung, von der zuerst im Wasserstrahlvakuum und anschließend im Ölpumpenvakuum überschüssiges Thionylchlorid abdestilliert wird. Danach wird in 40 ml absolutem Ether aufgenommen und von einigen Flocken abfiltriert. Die etherische Lösung wird innerhalb von 30 Minuten zu einer auf 0 bis 5°C temperierten Mischung aus 6,65 g (0,024 Mol) Bromoxinil (= 3,5-Dibrom-4-hydroxybenzonitril), 10 ml absolutem Tetrahydrofuran und 4 ml Triethylamin zugetropft. Nach 5-stündigem Rühren bei Raumtemperatur und einer 12-stündigen Ruhephase wird das Lösungsmittel im Vakuum abdestilliert. Der Rückstand wird in Chloroform aufgenommen, 3 mal mit Wasser gewaschen, über Natriumsulfat getrocknet, filtriert und zur Trockne eingeengt. Das Rohprodukt wird in wenig Methylenchlorid gelöst. Die Lösung wird auf eine Kieselgelsäule gegeben. Mit Methylenchlorid als Elutionsmittel werden 7 Fraktionen gewonnen. Die Rückstände der Fraktionen werden aus n-Heptan/Al₂O₃ umkristallisiert. Danach liegt das Monomer in dünnschichtchromatografischer Reinheit vor.
Ausbeute: 6,9 g
Fp.: 111,6 bis 112,3°C

### Polymer 1 (Vergleich)

### Polymerisation des Monomeren 2

Im Doppelmantelgefäß mit Magnetrührer werden 2 g Monomer 2, 0,0052 g Azobisisobutyronitril (1 Mol-%) in 20 ml frisch destilliertem Tetrahydrofuran gelöst. Die Lösung wird 60 Minuten mit Stickstoff gespült und danach auf 55°C eingestellt. Die Polymerisation wird unter Stickstoff ausgeführt. Nach 24 Stunden wird die Polymerisation durch Eingießen der Lösung in 200 ml Ethanol abgebrochen. Der Niederschlag wird abgesaugt und in 20 ml Tetrahydrofuran gelöst. Beim Eingießen in 250 ml Ethanol fällt das gereinigte Polymer aus. Es wird abgesaugt und bei vermindertem Druck bei 40°C bis zur Gewichtskonstanz getrocknet.
Ausbeute: 1,6 g
Das Polymer ist nicht flüssigkristallin. Sein Schmelzpunkt wird zu 128°C bestimmt. Aus der DSC-Analyse ergibt sich die Glastemperatur zu 83°C. Die osmotisch und chromatografisch bestimmten Molmassen betragen Mw = 4,6 · 10⁵ g/Mol, Mn = 1,1 · 10⁵ g/Mol.

### Monomer 3

### Herstellung von 3-Brom-4-[6-(2-methylpropenoyloxy)-hexyloxyl]-4'-methoxyphenylbenzoat

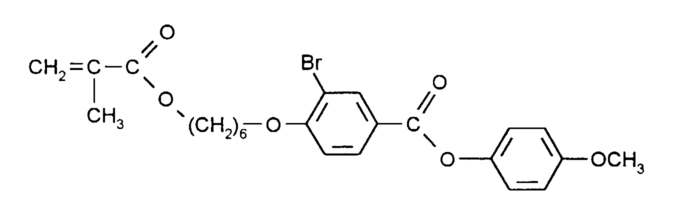

Zu 28 g (0,073 Mol) der vorgelegten Säure (= Monomer 1) werden ca. 0,05 g Di-tert.-butylphenol, 50 ml Thionylchlorid und 2 Tropfen DMF gegeben. Es wird 30 Minuten bei Raumtemperatur gerührt. Von der klaren Lösung wird der Überschuß an Thionylchlorid bei Raumtemperatur im Vakuum abdestilliert; den Rückstand löst man in 100 ml Toluol und anschließend wird von evtl. ausfallenden Flocken abfiltriert. Die Lösung wird bei 55°C innerhalb von 30 Minuten zu einer Mischung aus 9,03 g (0,073 Mol) p-Methoxyphenol und 12 ml Triethylamin in 300 ml Toluol zugetropft. Es wird etwa 3 Stunden bei 55°C gerührt. Die Reaktion wird dünnschichtchromatografisch kontrolliert. Das ausgefallene Salz wird abgesaugt und die Toluollösung mehrmals mit Wasser gewaschen; anschließend wird mit Natriumsulfat getrocknet. Zur Isolierung des Rohproduktes wird das Toluol bei etwa 30°C bei vermindertem Druck abdestilliert. Das Rohprodukt wird mehrmals aus Methanol umkristallisiert.
Ausbeute: 36,1 % (86,4 %)
Fp.: 86,6 bis 87,3°C

### Monomer 4

### Herstellung von 4-[6-(2-Methylpropenoyloxy)-hexyloxy]-benzoesäure

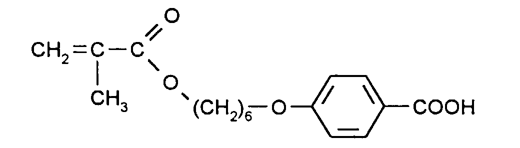

Die Synthese erfolgt in Analogie zur Herstellung des Monomeren 1, wobei die dazu notwendige 4-[Hexan-6-ol]-benzoesäure aus 4-Hydroxybenzoesäure und Chlorhexanol hergestellt wurde.
Ausbeute: 76 %.

### Monomer 5

### Herstellung von 4-[6-(2-Methylpropenoyloxy)-hexyloxy]-3',4'-dimethoxyphenylbenzoat

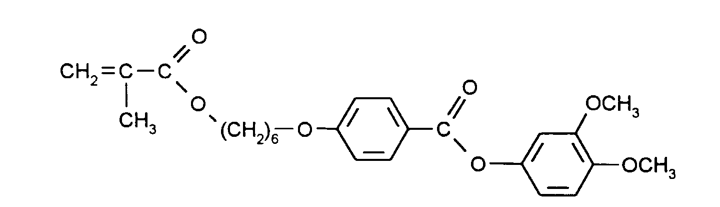

Die Synthese erfolgt in Analogie zur Herstellung des Monomeren 3 unter Verwendung des Monomeren 4 und des 3,4-Dimethoxyphenols als Vorstufen.

Die Aufarbeitung erfolgt zunächst durch Umkristallisieren aus Methanol. Falls dadurch keine genügende Reinheit erzielt werden kann, wird das Produkt auf eine Kieselgel-Säule gegeben. Als Laufmittel wird Methylenchlorid verwendet. Die das Produkt enthaltenden Fraktionen werden unter vermindertem Druck eingeengt und anschließend unter Rühren in n-Hexan eingetropft. Dabei fällt das Produkt in reiner Form aus.
Ausbeute: 42,4 %
Fp.: 77,5 bis 78°C

### Monomer 6

### Herstellung von p-(6-Brom-hexyloxy)azobenzol

Ein Gemisch aus 454 g (1,86 Mol) Dibromhexan, 128,5 g Kaliumcarbonat und ca. 0,2 g Kaliumiodid in 460 ml Aceton wird zum Sieden erhitzt. Dann wird eine Lösung von 36,9 g (0,186 Mol) p-Hydroxyazobenzol in 330 ml Aceton in mehreren Portionen zugegeben. Um Siedeverzüge zu vermeiden, wird ständig gerührt. Nach etwa 4,5 Stunden wird die Reaktion abgebrochen, die noch heiße Lösung filtriert und mit wenig Aceton wird aus den abfiltrierten anorganischen Salzen noch etwas Farbstoff ausgewaschen. Von der Lösung wird das Aceton unter leicht vermindertem Druck entfernt. Anschließend wird das überschüssige Dibromhexan im Ölpumpenvakuum entfernt.

Das orangefarbene Rohprodukt wird 2 mal aus jeweils 2 l heißem Methanol umkristallisiert. Das saubere Endprodukt ist gelb.
Ausbeute: 49,2 g (63,8 %)
Fp.: 71,5°C

### Monomer 7

### Herstellung von 4-[6-(2-Methylpropenoyloxy)-hexyloxy]-azobenzol

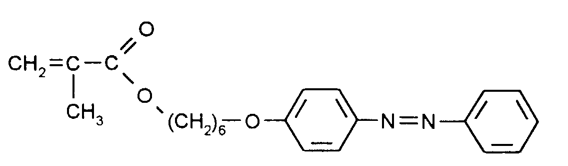

4,34 g (0,035 Mol) Kaliummethacrylat werden in 250 ml DMF vorgelegt und auf 70°C erwärmt. Erst im Verlaufe der Reaktion geht das gesamte Salz in Lösung. Zu der gesättigten heißen Salzlösung wird in mehreren Portionen Monomer 6 (7,23 g, 0,02 Mol) gegeben. Der Abbruch der Reaktion erfolgt durch Eingießen in Eiswasser. Nach Stehen über Nacht wird filtriert und unter vermindertem Druck über Calciumchlorid getrocknet. Das Produkt wird aus 500 ml n-Hexan umkristallisiert.
Ausbeute: 5,1 g (69,6 %)
Fp.: 86,5°C

### Polymer 2

### Vorschrift für die Copolymerisation der Monomeren 3 und 7

Eine 10 %ige Lösung des jeweiligen Monomers oder der entsprechenden Comonomeren wird mit 1 Mol-% Azobisisobutyronitril bei 65°C in Benzol oder in THF 24 Stunden polymerisiert. Mit den in der radikalischen Polymerisation üblichen Methoden ist dabei auf Sauerstoffausschluß zu achten. Der Abbruch der Reaktion erfolgt durch Eingießen der Lösung in die zehnfache Menge Methanol.

Nach Stehen über Nacht wird der Niederschlag filtriert und noch mindestens 2 mal aus THF durch Umfällen in Ethanol gereinigt. Reinheitskriterium ist die mittels Gelpermeationschromatographie nachgewiesene Monomerfreiheit.
Das Polymer wird bei 30 bis 40°C im Vakuum getrocknet.

Die Eigenschaften der Copolymere sind in den Tabellen 1 und 2 aufgeführt:

**Tabelle 1**

| Polymer | Monomer/Menge | Monomer/Menge | Ausbeute* (%) |
|---|---|---|---|
| 2 | 7 | 3 | 76,8 |
| | 40 % | 60 % | |

| | | | |
|---|---|---|---|
| *) nach 2 mal Umfällen | | | |

**Tabelle 2**

| Polymer | Mw | E** | Phasenabfolge*** |
|---|---|---|---|
| 2 | 170 000 | 2.1 | g 48 i |

| | | | |
|---|---|---|---|
| **) Einheitlichkeit E = Mw/Mn | | | |
| ***) Phasen aus DSC, Röntgenbeugung, Polarisationsmikroskopie | | | |

### Monomer 8

### Darstellung der 4-(6-Hydroxy-hexyloxy)-3-methoxy-benzoesäure

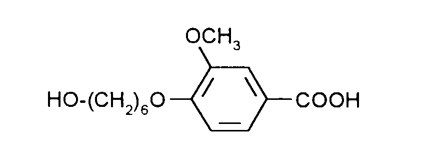

In einem 750 ml Sulfierkolben mit Rührer, Rückflußkühler, Innenthermometer und Tropftrichter werden 50 g (0,3 Mol) 4-Hydroxy-3-methoxy-benzoesäure in einer Mischung aus 100 ml Ethanol und 100 ml Wasser suspendiert. Unter Rühren wird eine Lösung von 45 g (0,8 Mol) Kaliumhydroxid in 45 ml Wasser zugetropft. Die Lösung wird zum Sieden erhitzt und mit ca. 0,1 g Kaliumiodid versetzt. Nun werden unter Rückfluß innerhalb von 45 Minuten 45,1 g (0,33 Mol) 6-Chlorhexanol zugetropft. Es wird weitere 24 Stunden unter Rückfluß gekocht. Nach 24 Stunden kann dünnschichtchromatografisch kein Edukt mehr nachgewiesen werden.

Die erkaltete Reaktionslösung wird mit Essigsäure angesäuert und am Rotationsverdampfer eingeengt. Die rotbraune Kristallmasse wird mit einer Lösung von 5 g Kaliumhydroxid in 400 ml Wasser versetzt und leicht erwärmt. Anschließend wird 4 mal mit je 60 ml Ether ausgeschütelt. Das Produkt wird durch Ansäuern mit Essigsäure aus der wäßrigen Phase ausgefällt. Nach Filtration, Waschen mit Wasser und Trocknung bei 60°C liegen 63,2 g Rohprodukt vor. Durch Umfällung aus 600 ml Methanol erhält man beigefarbene, dünnschichtreine Kristalle.
Ausbeute: 50,4 g (62,2 %)
Fp.: 133°C

### Monomer 9

### Darstellung von 3-Methoxy-4-(6-methacryloyloxy-hexyloxy)-(4'-methoxyphenyl)-benzoat

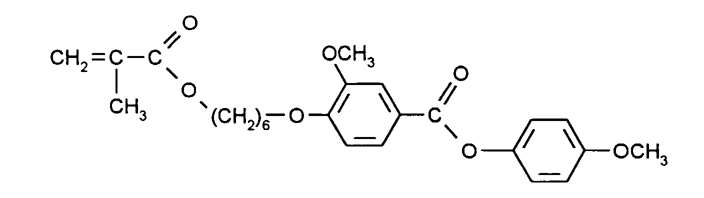

In einem im Vakuum ausgeheizten 250 ml Rundkolben werden unter Stickstoff 29,6 g (0,088 Mol) 3-Methoxy-4-(6-methacryloyloxyhexyloxy)-benzoesäure, ca. 0,5 g 2,6-Di-tert.-butylphenol und 5 Tropfen N,N-Dimethylformamid vorgelegt.

Innerhalb von 15 Minuten werden unter Rühren 105,6 g (0,888 Mol) Thionylchlorid zugetropft. Nach weiterem Rühren entsteht eine klare Lösung, aus der nach 30 Minuten bei 40°C überschüssiges Thionylchlorid am Rotationsverdampfer abdestilliert wird. Es wird 2 mal mit je 50 ml trockenem Tetrahydrofuran versetzt und eingeengt. Das Rohprodukt wird ungereinigt in die folgende Reaktion eingesetzt.

Im 50 ml Rundkolben werden 5,16 g (0,044 Mol) 4-Methoxyphenol und 6,68 g (0,066 Mol) Triethylamin in 100 ml trockenem Toluol vorgelegt. Unter Rühren wird im Verlauf von 45 Minuten bei 25°C eine Lösung von 15,5 g (0,044 Mol) des Säurechlorids in 50 ml Toluol zugetropft. Es wird 3 Stunden bei 55°C und weitere 16 Stunden bei Raumtemperatur gerührt. Dann wird am Rotationsverdampfer bei 40°C eingeengt und der feste Rückstand in 100 ml Chloroform aufgenommen. Die organische Phase wird 4 mal mit 100 ml Wasser ausgeschüttelt. Nach Trocknung über Natriumsulfat wird im Vakuum eingeengt. Fünfmaliges Ausschütteln des Rückstandes mit jeweils 300 ml siedendem n-Hexan und Kristallisation im Tiefkühlschrank führt zu 9,6 g Rohprodukt. Die Kristalle werden über einer Kieselgelsäule mit Methylenchlorid als Laufmittel gereinigt. Durch Umfällen aus Methanol werden letzte Verunreinigungen entfernt.
Ausbeute: 5,3 g (27,6 %)
Fp.: 83,7 bis 84,5°C

### Monomer 10

### Darstellung von 3-Methoxy-4-(6-methacryloyloxy-hexyloxy)-biphenyl-benzoat

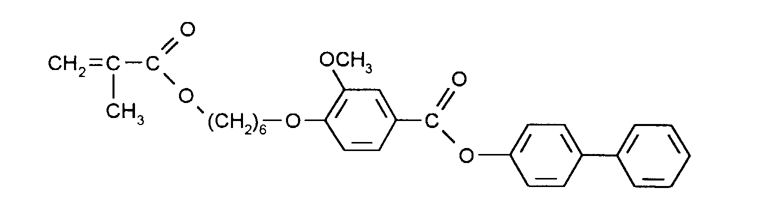

Die Darstellung des Benzoesäurechlorids erfolgt analog der für Monomer 9 beschriebenen Verfahrensweise.

15,6 g (0,044 Mol) des 3-Methoxy-4-(6-methacryloyloxyhexyloxy)-benzoesäurechlorids werden in 50 ml trockenem Toluol vorgelegt. Eine Lösung von 7,49 g (0,044 Mol) 4-Hydroxybiphenyl, 6,68 g (0,066 Mol) Triethylamin und 100 ml Toluol werden zugetropft. Nach 3 Stunden bei 55°C liegen 16,3 g Rohprodukt in Form glänzender weißer Nadeln vor. Es erfolgt eine säulenchromatografische Reinigung.
Ausbeute: 10,8 g (50,3 %)
Fp.: 98,5 bis 99,5°C

### Polymer 3 bis 8

### Copolymerisation der Monomeren 7, 9 und 10

Die Polymerisation folgt der Vorschrift zur Herstellung der Polymeren 2 bis 4. Die Eigenschaften Copolymere sind in den Tabellen 3 und 4 zusammengestellt.

**Tabelle 3**

| Beispiel | Monomer/Anteil (Mol-%) | Monomer/Anteil (Mol-%) | Ausbeute (%) |
|---|---|---|---|
| 3 | 9 75 | 7 25 | 76,4 |
| 4 | 9 50 | 7 50 | 72,6 |
| 5 | 9 25 | 7 75 | 74,5 |
| 6 | 10 75 | 7 25 | 79,9 |
| 7 | 10 50 | 7 50 | 81,1 |
| 8 | 10 25 | 7 75 | 79,6 |

**Tabelle 4**

| Beispiel | Mw | E | Phasenabfolge/°C |
|---|---|---|---|
| 3 | 170 000 | 2,4 | g 42 i |
| 4 | 260 000 | 2,5 | g 43 i |
| 5 | 100 000 | 1,8 | g 45 i |
| 6 | 190 000 | 2,5 | g 60 i |
| 7 | 190 000 | 2,5 | g 54 i |
| 8 | 110 000 | 2,0 | g 50 i |

## Patentansprüche

1. Copolymere mit als Rückgrat wirkender Poly(meth)acrylat-Hauptkette und davon abzweigenden kovalent gebundenen Seitengruppen; die sowohl Strukturen der Formel 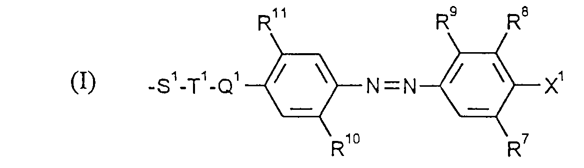 als auch 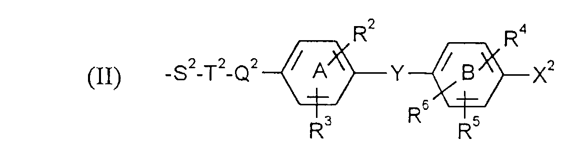 enthalten,
worin
S¹, S² unabhängig voneinander die Atome O, S oder den Rest NR¹ bedeuten,
R¹ Wasserstoff, C₁-C₆-Alkyl oder Phenyl bedeutet,
T¹, T² unabhängig voneinander den Rest (CR¹,R¹²)ₙ bedeuten, der gegebenenfalls durch -O-, -S-, -NR¹- oder -OSiR¹ ₂O-unterbrochen sein kann,
n eine ganze Zahl von 2 bis 12,
Q¹, Q² unabhängig voneinander -O-, -COO-, -OCO-, -CONR¹-, -NR¹CO-, -NR¹-, -O-C₆H₄-COO- oder -O-C₆H₄-CONR¹-darstellen, wobei zusätzlich die Kombinationen S¹T¹Q¹ und S²T²Q² unabhängig voneinander 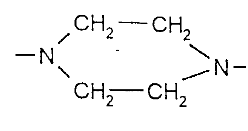 sein können,
R² bis R⁶ unabhängig voneinander Wasserstoff, Halogen, C₁-C₄-Alkyl, C₁-C₄-Alkoxy, CF₃, Nitro, SO₂CH₃, SO₂NH₂ oder Cyan bedeuten, wobei mindestens einer der Substituenten R² bis R⁶ ungleich Wasserstoff sein muß,
R⁷ bis R⁹ unabhängig voneinander Wasserstoff, C₁-C₆-Alkyl, Hydroxyl, C₁-C₆-Alkoxy, Phenoxy, C₁-C₆-Alkylthio, Phenylthio, Halogen, CF₃, CCl₃, CBr₃, Nitro, Cyan, C₁-C₆-Alkylsulfonyl, Phenylsulfonyl, COOR¹, Aminosulfonyl, C₁-C₆-Alkylaminosulfonyl, Phenylaminosulfonyl, Aminocarbonyl, C₁-C₆-Alkylaminocarbonyl, Phenylaminocarbonyl bedeuten,
R¹⁰ Wasserstoff, Halogen, C₁-C₆-Alkyl, Hydroxyl, C₁-C₆-Alkoxy, Phenoxy, C₁-C₄-Acylamino, C₁-C₄-Alkylsulfonylamino bedeutet,
R¹¹ Wasserstoff, Halogen, C₁-C₆-Alkyl, Hydroxyl, C₁-C₆-Alkoxy, Phenoxy bedeutet,
Y eine direkte Bindung, -COO-, -OCO-, -CONH-, -NHCO-, -O-, -NH-, -N(CH₃)- und
X¹, X² unabhängig voneinander Wasserstoff, Hydroxyl, Mercapto, CF₃, CCl₃, CBr₃, Halogen, Cyan, Nitro, COOR¹, C₁-C₆-Alkyl, C₅-C₁₂-Cycloalkyl, C₁-C₁₂-Alkoxy, C₁-C₁₂-Alkylthio, C₆-C₁₂-Aryl, C₆-C₁₂-Aryloxy, C₆-C₁₂-Arylthio, C₁-C₆-Alkylsulfonyl, C₆-C₁₂-Arylsulfonyl, Aminosulfonyl, C₁-C₆-Alkylaminosulfonyl, Phenylaminosulfonyl, Aminocarbonyl, C₁-C₆-Alkylaminocarbonyl, Phenylaminocarbonyl, NR¹²,R¹³, NH-CO-R¹², NH-SO₂-R¹², NH-CO-NR¹,R², NH-CO-O-R¹² oder SO₂-CF₃ bedeuten, worin R¹² und R¹³ unabhängig voneinander für Wasserstoff, C₁-C₄-Alkyl oder Phenyl stehen,
mit der Maßgabe, daß für den Fall, daß R⁷ bis R¹¹ für Wasserstoff stehen und Ring B durch C₁-C₄-Alkyl, C₁-C₄-Alkoxy, Nitro oder Cyan substituiert ist, in dem System Ring A -Y- Ring B mindestens noch ein zweiter Substituent vorhanden ist.

2. Polymere nach Anspruch 1, wobei n für eine ganze Zahl von 4 bis 8 steht.

3. Polymere nach Anspruch 1, wobei n für 6 steht.

4. Polymere nach Anspruch 1, wobei die wiederkehrenden Einheiten den Formeln 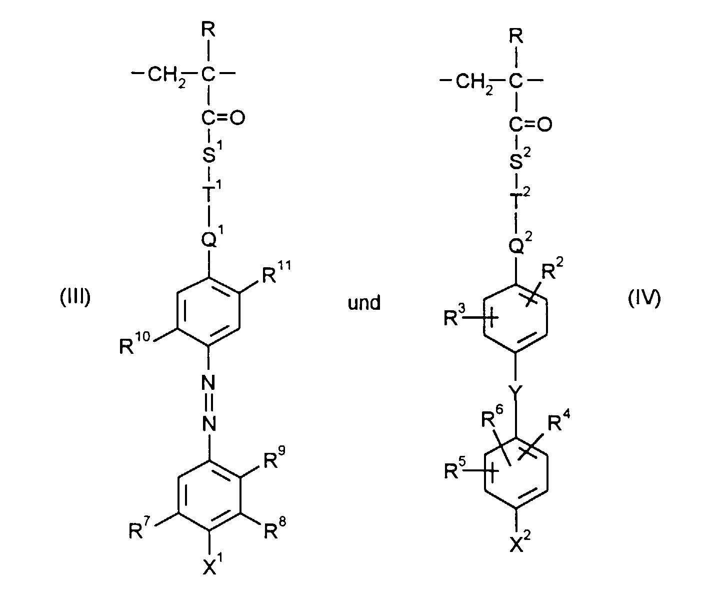 mit R = H oder Methyl entsprechen,
und
S¹, S², T¹, T², Q¹, Q², X¹, X², Y und R² bis R¹¹ die in Anspruch 1 angegebenen Bedeutungen besitzen.

5. Polymere nach Anspruch 1, in denen bei Vorhandensein von Seitenketten der Struktur (I) und (II) wenigstens eine Gruppe Q¹ bzw. Q² die Bedeutung -OC₆H₄-COO- oder -O-C₆H₄-CONR¹- hat.

6. Polymere nach Anspruch 1, in denen die Gruppen T¹ und T² unabhängig voneinander 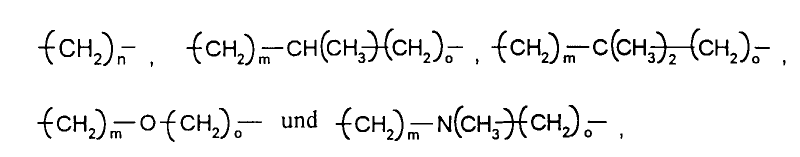 worin
n eine ganze Zahl von 2 bis 6 ist und
m und o unabhängig voneinander ganze Zahlen von 0 bis 2 sind, deren Summe mindestens 1 beträgt.

7. Verwendung der Polymeren nach Ansprüchen 1 bis 4 für optische Bauelemente.

## Claims

1. Copolymers having a poly(meth)acrylate main chain which acts as a backbone, and covalently bonded side groups branching off therefrom which contain structures of both formula 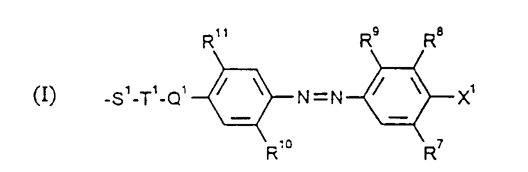 and of formula 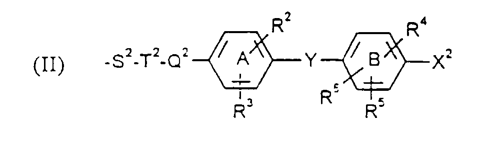 wherein
S¹, S², independently of each other, denote the atoms O or S or the radical NR¹,
R¹ denotes hydrogen, a C₁-C₆ alkyl or phenyl,
T¹, T², independently of each other, denote the radical (CR¹,R¹²)ₙ, which may optionally be interrupted by -O-, -S-, -NR¹- or -OSiR¹ ₂O-,
n is an integer from 2 to 12,
Q¹, Q², independently of each other, represent -O-, -COO-, -OCO-, -CONR¹-, -NR¹CO-, NR¹, -O-C₆H₄-COO- or -O-C₆H₄-CONR¹, wherein in addition the combinations S¹T¹Q¹ and S²T²Q², independently of each other, can be 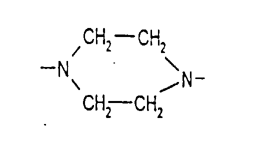
R² to R⁶, independently of each other, denote hydrogen, a halogen, a C₁-C₄ alkyl, a C₁-C₄ alkoxy, CF₃, nitro, SO₂CH₃, SO₂NH₂ or cyano, wherein at least one of the substituents R² to R⁶ must be different from hydrogen,
R⁷ to R⁹, independently of each other, denote hydrogen, a C₁-C₆ alkyl, hydroxyl, a C₁-C₆ alkoxy, phenoxy, a C₁-C₆ alkylthio, phenylthio, a halogen, CF₃, CCl₃, CBr₃, nitro, cyano, a C₁-C₆ alkylsulphonyl, phenylsulphonyl, COOR¹, aminosulphonyl, a C₁-C₆ alkylaminosulphonyl, phenylaminosulphonyl, aminocarbonyl, a C₁-C₆ alkylaminocarbonyl or phenylaminocarbonyl,
R¹⁰ denotes hydrogen, a halogen, a C₁-C₆ alkyl, hydroxyl, a C₁-C₆ alkoxy, phenoxy a C₁-C₄ acylamino or a C₁-C₆ alkylsulphonylamino,
R¹¹ denotes hydrogen, a halogen, a C₁-C₆ alkyl, hydroxyl, a C₁-C₆ alkoxy or phenoxy,
Y denotes a direct bond, -COO-, -OCO-, -CONH-, -NHCO-, -O-, -NH- or -N(CH₃)-, and
X¹, X², independently of each other, denote hydrogen, hydroxyl, mercapto, CF₃, CCl₃, CBr₃, a halogen, cyano, nitro, COOR¹ ₁, a C₁-C₆ alkyl, a C₅-C₁₂ cycloalkyl, a C₁-C₁₂ alkoxy, a C₁-C₁₂ alkylthio, a C₆-C₁₂ aryl, a C₆-C₁₂ aryloxy, a C₆-C₁₂ arylthio, a C₁-C₆ alkylsulphonyl, a C₆-C₁₂ arylsulphonyl, aminosulphonyl, a C₁-C₆ alkylaminosulphonyl, phenylaminosulphonyl, aminocarbonyl, a C₁-C₆ alkylaminocarbonyl, phenylaminocarbonyl, NR¹²,R¹³, NH-CO-R¹², NH-SO₂-R¹², NH-CO-NR¹,R², NH-CO-O-R¹² or SO₂-CF₃, wherein R¹² and R¹³, independently of each other, represent hydrogen, a C₁-C₄ alkyl or phenyl,
with the proviso that if R⁷ to R¹¹ represent hydrogen and Ring B is substituted by a C₁-C₄ alkyl, a C₁-C₄ alkoxy, nitro or cyano, at least one second substituent is also present in the Ring A-Y-Ring B system.

2. Polymers according to claim 1, wherein n represents an integer from 4 to 8.

3. Polymers according to claim 1, wherein n represents 6.

4. Polymers according to claim 1, wherein the repeat units correspond to the formulae 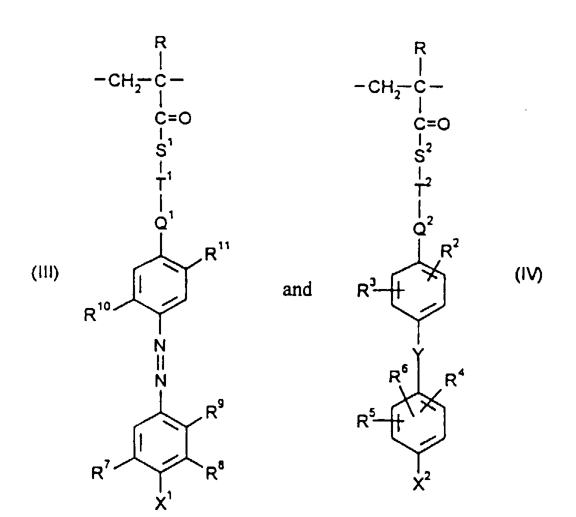 where R = H or methyl,
and
S¹, S², T¹, T², Q¹, Q², X¹, X², Y and R² to R¹¹ have the meanings given in claim 1.

5. Polymers according to claim 1, wherein in the presence of side chains of structures (I) and (II) at least one group Q¹ or Q² has the meaning -OC₆H₄-COO- or -O-C₆H₄-CONR¹-.

6. Polymers according to claim 1, wherein the groups T¹ and T², independently of each other, denote 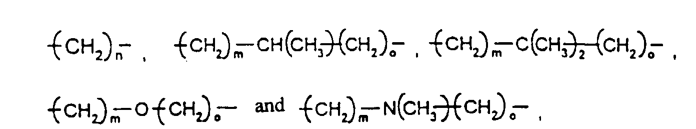 wherein
n is an integer from 2 to 6, and
m and o, independently of each other, are integers from 0 to 2, the sum of which is at least 1.

7. Use of the polymers according to claims 1 to 4 for optical components.

## Revendications

1. Copolymères avec comme ossature une chaîne principale de poly(méth)acrylate et des groupes latéraux liés de manière covalente, ramifiés à partir de celle-ci, qui contiennent aussi bien les structures de formule : 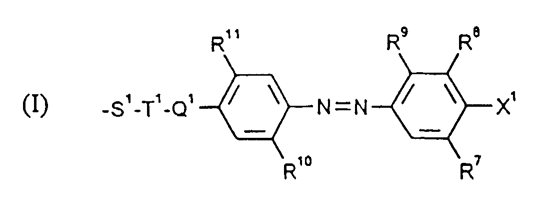 que 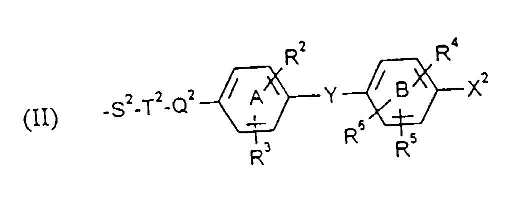 dans lesquelles
S¹, S² représentent indépendamment l'un de l'autre les atomes O, S ou le groupe NR¹,
R¹ représente l'hydrogène, un groupe alkyle en C₁-C₆ ou phényle,
T¹, T² représentent indépendamment l'un de l'autre le groupe (CR¹,R¹²)ₙ qui peut éventuellement être interrompu par -O-, -S-, -NR¹- ou -OSiR¹ ₂O- ;
n est un nombre entier de 2 à 12,
Q¹, Q² représentent indépendamment l'un de l'autre -O-, -COO-, -OCO-, -CONR¹, -NR¹CO-, -NR¹-, -O-C₆H₄-COO- ou -O-C₆H₄-CONR¹-, où en outre les combinaisons S¹T¹Q¹ et S²T²Q² peuvent être indépendamment l'une de l'autre 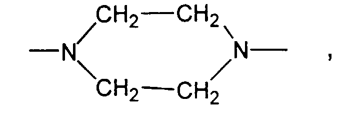
R² à R⁶ représentent indépendamment l'un de l'autre l'hydrogène, un halogène, un groupe alkyle en C₁-C₄, alcoxy en C₁-C₄, CF₃, nitro, SO₂CH₃, SO₂NH₂ ou cyano, où au moins un des substituants R² à R⁶ doit être différent de l'hydrogène,
R⁷ à R⁹ représentent indépendamment l'un de l'autre l'hydrogène, un groupe alkyle en C₁-C₆, hydroxyle, alcoxy en C₁-C₆, phénoxy, alkylthio en C₁-C₆, phénylthio, halogéno, CF₃, CCl₃, CBr₃, nitro, cyano, alkylsulfonyle en C₁-C₆, phénylsulfonyle, COOR¹, aminosulfonyle, alkylaminosulfonyle en C₁-C₆, phénylaminosulfonyle, aminocarbonyle, alkylaminocarbonyle en C₁-C₆, phénylaminocarbonyle,
R¹⁰ représente l'hydrogène, un halogène, un groupe alkyle en C₁-C₆, hydroxyle, alcoxy en C₁-C₆, phénoxy, acylamino en C₁-C₄, alkylsulfonylamino en C₁-C₄,
R¹¹ représente l'hydrogène, un halogène, un groupe alkyle en C₁-C₆, hydroxyle, alcoxy en C₁-C₆, phénoxy,
Y est une liaison directe, -COO-, -OCO-, -CONH-, -NHCO-, -O-, -NH-, -N(CH₃)- et
X¹, X² représentent indépendamment l'hydrogène, un groupe hydroxyle, mercapto, CF₃, CCl₃, CBr₃, un halogène, un groupe cyano, nitro, COOR¹, alkyle en C₁-C₆, cycloalkyle en C₅-C₁₂, alcoxy en C₁-C₁₂, alkylthio en C₁-C₁₂, aryle en C₆-C₁₂, aryloxy en C₆-C₁₂, arylthio en C₆-C₁₂, alkylsulfonyle en C₁-C₆, arylsulfonyle en C₆-C₁₂, aminosulfonyle, alkylaminosulfonyle en C₁-C₆, phénylaminosulfonyle, aminocarbonyle, alkylaminocarbonyle en C₁-C₆, phénylaminocarbonyle, NR¹², R¹³, NH-CO-R¹², NH-SO₂-R¹², NH-CO-NR¹, R², NH-CO-O-R¹² ou SO₂-CF₃, où R¹² et R¹³ représentent indépendamment l'un de l'autre l'hydrogène, un groupe alkyle en C₁-C₄ ou phényle,
sous réserve que dans le cas où R⁷ à R¹¹ sont l'hydrogène et où le cycle B est substitué par un groupe alkyle en C₁-C₄, alcoxy en C₁-C₄, nitro ou cyano, dans le système du cycle A-Y-cycle B au moins encore un deuxième substituant soit présent.

2. Polymères selon la revendication 1, caractérisés en ce que n est un nombre entier de 4 à 8.

3. Polymères selon la revendication 1, caractérisés en ce que n vaut 6.

4. Polymères selon la revendication 1, caractérisés en ce que les unités récurrentes ont les formules 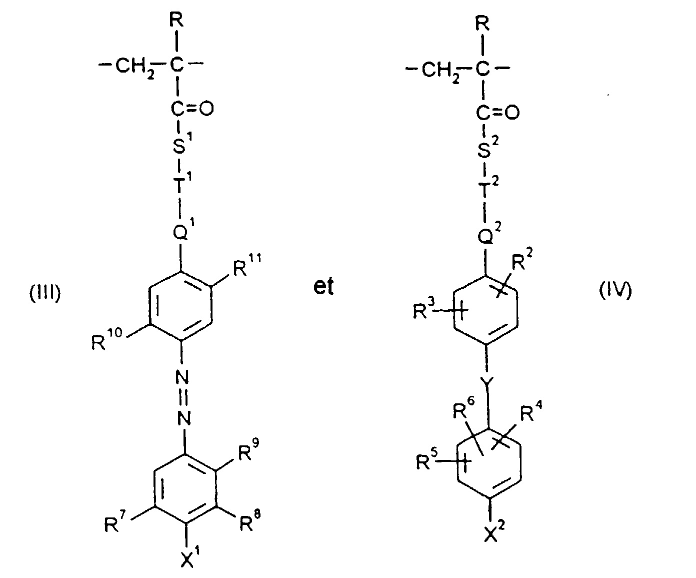 dans lesquelles R = H ou un groupe méthyle,
et
S¹, S², T¹, T² , Q¹, Q², X¹, X², Y et R² à R¹¹ ont les significations données dans la revendication 1.

5. Polymères selon la revendication 1, caractérisés en ce qu'en présence des chaînes latérales de structure (I) et (II) au moins un des groupes Q¹, respectivement Q², a la signification -OC₆H₄-COO- ou -O-C₆H₄-CONR¹-.

6. Polymères selon la revendication 1, dans lesquels les groupes T1 et T2 indépendamment l'un de l'autre représentent 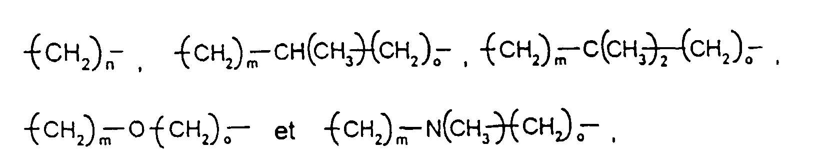 où
n est un nombre entier de 2 à 6 et
m et o représentent indépendamment l'un de l'autre des nombres entiers de 0 à 2, dont la somme vaut au moins 1.

7. Utilisation des polymères selon les revendications 1 à 4 comme composants optiques.
